Europäisches Patentamt

European Patent Office

Office européen des brevets

(11) Numéro de publication : **0 652 647 A1**

# (12) DEMANDE DE BREVET EUROPEEN

(21) Numéro de dépôt : **94402507.1**

(22) Date de dépôt : **07.11.94**

(51) Int. Cl.⁶ : **H04B 1/707**, H04J 13/00, H04B 7/26

(30) Priorité : **10.11.93 FR 9313477**

(43) Date de publication de la demande :
**10.05.95 Bulletin 95/19**

(84) Etats contractants désignés :
**AT BE CH DE DK ES FR GB IT LI NL SE**

(71) Demandeur : **ALCATEL MOBILE COMMUNICATION FRANCE**
**10, rue de la Baume**
**F-75008 Paris (FR)**

(72) Inventeur : **Le Strat, Evelyne**
**22, Rue Marmontel**
**F-75015 Paris (FR)**
Inventeur : **Olivier, René**
**7, Allée de la Beauce**
**F-78640 St Germain de la Grange (FR)**

(74) Mandataire : **Renaud-Goud, Thierry et al**
**c/o SOSPI,**
**14-16, rue de la Baume**
**F-75008 Paris (FR)**

(54) **Procédé de construction d'un code d'étalement associé à un utilisateur d'un système de transmisssion numérique à accès multiple par répartition par codes et à séquence directe, et procédé correspondant de génération d'un tableau.**

(57)  L'invention concerne un procédé de construction d'un code d'étalement associé à un utilisateur d'un système de transmission numérique à accès multiple par répartition par codes et à séquence directe.

Selon l'invention, ce procédé comprend au moins une étape de concaténation de plusieurs sous-codes différents (4), à savoir :

— au moins deux sous-codes de base (1) différents, notamment cycliquement, et appartenant à une même famille de sous-codes de base ; et

— au moins un sous-code secondaire (2) obtenu par permutation circulaire d'un desdits sous-codes de base (1).

Le domaine de l'invention est celui des transmissions numériques, notamment vers des mobiles. plus précisément, l'invention concerne un procédé de construction d'un code d'étalement associé à un utilisateur d'un système de transmission numérique à Accès Multiple par Répartition par Code et à Séquence Directe, système dit AMRC-SD (DS-CDMA en anglo-saxon).

Il existe essentiellement trois grands types de systèmes de transmission numérique à accès multiple, dits AMRF (FDMA en anglo-saxon), AMRT (TDMA) ou AMRC (CDMA).

L'accès multiple par répartition en fréquence (AMRF) a été le premier système historiquement utilisé. Son principe consiste a séparer les communications à transmettre en attribuant à chacune une bande de fréquence spécifique, qui peut aisément être séparée des autres par filtrage à la réception.

Il est peu utilisé aujourd'hui, du fait qu'il impose d'avoir un récepteur par canal de transmission utilisé, obligeant de ce fait à disposer un nombre considérable de récepteurs dans une station centrale si on veut être capable de converser simultanément avec un nombre important de stations réparties.

L'AMRT (Accès Multiple à Répartition dans le Temps) est un système dont le principe consiste à partager temporellement la totalité du canal de transmission : pour éviter que les informations ne se chevauchent, il n'y a qu'une seule station qui émet à la fois et, quand elle émet, elle occupe la totalité du canal.

Les systèmes d'AMRT posent notamment de difficiles problèmes d'égalisation quand le canal de transmission est perturbé par des échos ou des brouilleurs.

On connaît enfin la technique d'accès multiple à répartition par les codes (AMRC). Il s'agit d'un système qui fait appel aux techniques d'étalement de spectre.

L'une de ces techniques d'étalement de spectre, appelée étalement de spectre par séquence directe (DS-CDMA), consiste à émettre un signal $s(t)$ obtenu en multipliant un signal numérique de données $d(t)$ par un code d'étalement $g(t)$. $d(t)$ est un signal caractérisé par sa fréquence, appelée fréquence bit. Le code d'étalement $g(t)$, qui est propre à chaque utilisateur, est un signal pseudo-aléatoire caractérisé par sa fréquence, appelée fréquence chip, cette fréquence étant supérieure à la fréquence bit d'un facteur G connu appelé gain d'étalement ou facteur d'expansion de la bande. On a les relations :

- signal de données $d(t)$ :

$$d(t) = \sum_{k=-\infty}^{k=+\infty} d_k \delta(t-kT_b)$$

- code d'étalement $g(t)$ :

$$g(t) = \sum_{k=-\infty}^{k=+\infty} g_k \delta(t-kT_c)$$

- signal à transmettre $s(t)$:

$$s(t) = \sum_{k=-\infty}^{k=+\infty} d_{[\frac{k}{G}]} g_k \delta(t-kT_c)$$

où :

$T_b$ est l'inverse de la fréquence bit ;

$T_c$ est l'inverse de la fréquence chip ;

[] est la partie entière.

Le décodage à la réception s'effectue en combinant le signal reçu avec une réplique locale de $g(t)$ synchronisée sur l'émission.

Dans un système DS-CDMA, les codes d'étalement d'une même famille doivent être nombreux de façon à avoir un grand nombre d'utilisateurs possédant chacun un code d'étalement distinct. Ces codes d'étalement doivent également être suffisamment longs afin d'assurer une sécurité minimale contre des brouilleurs intentionnels, ainsi que la confidentialité de la transmission.

L'invention s'applique principalement au cas où le dispositif de réception est un récepteur à diversité, également appelé récepteur rake.

On peut montrer qu'avec un tel récepteur rake, l'optimisation des performances de réception en présence :

- d'interférences multi-utilisateurs, revient à utiliser des codes d'étalement présentant de bonnes propriétés d'intercorrélation apériodique partielle ;
- d'interférences entre symboles, revient à utiliser des codes d'élément présentant de bonnes propriétés d'autocorrélation apériodique partielle.

Partiel signifie ici que la corrélation n'est pas effectuée sur toute la période du code d'étalement. Apériodique signifie que la corrélation n'est pas effectuée par simple décalage de deux codes et corrélation sur un nombre prédéterminé d'éléments, mais par corrélation entre éléments correspondant à des mêmes bits.

L'auto-corrélation apériodique partielle, sur un nombre maximal G d'éléments (avec G le facteur d'étalement), d'un code noté ai, pour un indice de départ $k_1$ et un décalage $k_2$, peut par exemple être définie à l'aide de la formule suivante :

$$A_i(k_1,k_2) = \sum_{k=0}^{G-1-k_2 mod G} a_i(k_1+k).a_i(k_1+k_2+k) \quad pour \ k_2 \geq 0$$

$$A_i(k_1,k_2) = \sum_{k=0}^{-k_2 mod G-1} a_i(k_1+k).a_i(k_1+k_2+k) \quad pour \ k_2 < 0$$

mod représente la fonction mathématique "modulo".

De même, l'inter-corrélation apériodique partielle, sur un nombre maximal G d'éléments, entre deux codes notés $a_i$ et $a_m$, pour un indice de départ $k_1$ et un décalage $k_2$, peut par exemple être définie à l'aide de la formule suivante :

$$I_{i,m}(k_1,k_2) = \sum_{k=0}^{G-1-k_2 mod G} a_i(k_1+k).a_m(k_1+k_2+k) \quad pour \ k_2 \geq 0$$

$$I_{i,m}(k_1,k_2) = \sum_{k=0}^{-k_2 mod G-1} a_i(k_1+k).a_m(k_1+k_2+k) \quad pour \ k_2 < 0$$

Les codes d'étalement connus généralement utilisés dans les systèmes classiques DS-CDMA possèdent des propriétés de corrélation uniquement lorsque les corrélations sont effectuées sur la période entière du code d'étalement. Ces codes d'étalement connus, décrits notamment dans le document "Coherent Spread Spectrum Systems, J.K Holmes, Wiley Interscience 1992", sont par exemple des codes de Gold, ou des codes de Kasami.

Par conséquent, ces codes d'étalement connus ne permettent pas d'optimiser les performances d'un récepteur rake puisque celui-ci nécessite des codes d'étalement présentant de bonnes propriétés de corrélations partielles et apériodiques.

Dans le cas particulier d'un système DS-CDMA par inversion, c'est-à-dire dans le cas où le facteur d'étalement (ou facteur d'expansion de la bande) est égal à la période du code d'étalement, on connaît l'utilisation d'autres types de codes, à savoir les codes structurés.

Ces codes structurés, notamment décrits dans le document "New signature code sequence design for CDMA systems, T.O'Farrell, Electronic Letters, 14 Février 1991, Vol.27", sont obtenus en concaténant des sous-codes (ou codes courts). Les différents sous-codes sont eux mêmes obtenus par permutation circulaire d'un unique sous-code de départ. En d'autres termes, pour un même code structuré, tous les sous-codes sont égaux à une permutation circulaire près.

Ces codes structurés possèdent des propriétés particulières de corrélation, et notamment de corrélation apériodique. Toutefois, ces codes structurés présentent plusieurs inconvénients.

En effet, si L est la période du sous-code de départ, il existe L permutations circulaires possibles. La période L' du code structuré est donc au plus égale à $L^2$ ($L' \leq L^2$). Les codes structurés présentent donc l'inconvénient d'être relativement courts, et ne permettent pas d'assurer une bonne confidentialité.

De plus, le nombre maximal de codes structurés d'une même famille, et donc le nombre maximal d'utilisateurs est limité par K, le nombre de sous-codes cycliquement distincts disponibles. Ainsi, pour construire un code structuré associé à un utilisateur, on prend un unique sous-code de base, et on le concatène plusieurs fois avec des phases différentes.

L'invention a notamment pour objectif de pallier ces différents inconvénients de l'état de la technique.

Plus précisément, un objectif de l'invention est de fournir un procédé de construction d'une famille de code d'étalement pour un système DS-CDMA, ces codes d'étalement d'une même famille pouvant être nombreux, de longueur importante et présentant des propriétés d'auto et d'intercorrélations partielles apériodiques.

L'invention a donc pour objectif de fournir des codes d'étalement qui optimisent les performances d'un récepteur rake, notamment en présence d'interférences multi-utilisateurs et d'interférences entre symboles.

Cet objectif, ainsi que d'autres qui apparaîtront par la suite, sont atteints selon l'invention à l'aide d'un procédé de construction d'un code d'étalement associé à utilisateur d'un système de transmission numérique à accès multiple par répartition par codes et à séquence directe,

ledit procédé comprenant au moins une étape de concaténation de plusieurs sous-codes différents, à savoir :

- au moins deux sous-codes de base différents, notamment cycliquement, et appartenant à une même famille de sous-codes de base ; et
- au moins un sous-code secondaire obtenu par permutation circulaire d'un desdits sous-codes de base.

L'invention consiste donc à construire les codes d'étalement (ou codes longs) en concaténant des sous-codes (ou codes courts) obtenus à partir de sous-codes de base appartenant à une même famille de sous-codes mais distincts les uns des autres. Ces sous-codes sont soit des sous-codes de base, soit des sous-codes secondaires obtenus par permutation circulaire d'un des sous-codes de base.

Les sous-codes de base d'une même famille sont cycliquement différents, c'est-à-dire différents les uns des autres même si on effectue des permutations circulaires.

Selon l'invention, faire une intercorrélation apériodique partielle entre deux codes d'étalement pour des indices de départ multiples du facteur d'étalement revient à faire une intercorrélation apériodique entre les deux sous-codes faisant partie de ces deux codes d'étalement et correspondant aux instants définis par ces indices.

Par conséquent, selon l'invention, une intercorrélation apériodique partielle pour des indices de départ multiples du facteur d'étalement est donc égale soit à une intercorrélation apériodique entre deux sous-codes différents, soit à une autocorrélation apériodique sur un sous-code.

Les codes d'étalement (ou codes longs) héritent donc des propriétés d'inter ou d'autocorrélations apériodiques des sous-codes (ou codes courts) pour les intercorrélations partielles apériodiques de codes d'étalement.

De même, selon l'invention, faire une autocorrélation apériodique partielle sur un code d'étalement revient à faire une autocorrélation apériodique sur un sous-code.

Ainsi, en choisissant une famille de sous-codes de base qui possède de bonnes propriétés d'inter et d'autocorrélations apériodiques, sur leur période entière, on peut construire une famille de codes d'étalement qui disposera de bonnes propriétés d'inter et d'auto corrélations apériodiques partielles.

Par bonnes propriétés de corrélation, on entend que les auto-corrélations doivent être les plus faibles possible pour un décalage non nul et les inter-corrélations les plus faibles possible pour deux codes différents.

Une telle construction de codes d'étalement permet donc d'optimiser les performances de la réception pour un système DS-CDMA, puisque ces codes d'étalement permettent de limiter les interférences multi-utilisateurs et les interférences entre symboles.

Avantageusement, la période desdits sous-codes est égale au gain d'étalement dudit système de transmission.

Ainsi, les corrélations partielles, qui se font sur la longueur des sous-codes, sont effectuées sur une longueur correspondant au facteur d'étalement.

Il ne s'agit donc pas, comme pour les codes structurés cités auparavant, d'un système par inversion, dans lequel le facteur d'expansion de la bande (ou gain d'étalement) est égal à la période du code d'étalement (ou code long) et donc égal à plusieurs fois la période des sous-codes (ou codes courts).

Préférentiellement, ladite famille de sous-codes de base appartient au groupe comprenant :

- la famille des codes de Gold ; et
- la famille des codes de Kasami.

En effet, ces codes présentent de très bonnes propriétés de corrélation apériodique (inter et auto) sur leur période entière. Ils peuvent donc être utilisés comme sous-codes de base pour construire une famille de codes d'étalement qui dispose de bonnes propriétés d'auto et intercorrélations apériodiques partielles.

Ainsi, les performances en termes de taux d'erreur binaire sont améliorées et la longueur des codes d'étalement est raisonnable.

De façon avantageuse, ledit code d'étalement appartient à une famille d'au moins deux codes d'étalement distincts,

ledit code d'étalement pouvant s'écrire :

$$S_k = \sum_{q=0}^{n-1} T^{p_k(q)} . a_{c_k(q)}$$

où :
- . k est l'index dudit code d'étalement dans ladite famille ;
- . $\Sigma$ signifie concaténation ;
- . q est l'index de concaténation ;
- . n est le facteur de concaténation, c'est-à-dire le nombre total de sous-codes à concaténer pour former ledit code d'étalement ;
- . $T^x$ est une permutation circulaire de x éléments ;
- . $a_y$ est un sous-code de base d'une famille $\{a_y\}$ de sous-codes de base pouvant être utilisés pour construire les sous-codes à concaténer ;
- . $c_k(q)$ est la fonction indiquant le sous code de base à utiliser pour construire le $q^{ème}$ sous-code à concaténer dans ledit $k^{ème}$ code d'étalement ;
- . $p_k(q)$ est la fonction indiquant le nombre de permutations à effectuer sur le sous-code de base à considérer $a_y$, avec $y=c_k(q)$.

Ainsi, lorsqu'il est obtenu par concaténation de n sous-codes différents, un code d'étalement est défini par n couples $(p_k(q), c_k(q))$, où $q \, \varepsilon \, [0, n-1]$.

Avantageusement, ledit procédé comprend une étape d'association d'un couple $(p_k(q), c_k(q))$ à chaque valeur de q.

Préférentiellement, ladite étape d'association d'un couple $(p_k(q), c_k q))$ à chaque valeur de q est telle qu'un même sous-code ne peut pas avoir un même rang de concaténation dans ledit code d'étalement et dans n'importe quel autre code d'étalement de ladite famille de codes d'étalement.

Cette condition peut également s'écrire, avec les notations choisies :

$$(p_k(q), c_k(q)) \neq (p_j(q), c_j(q)) \text{ pour } k \neq j.$$

De façon préférentielle, ladite étape d'association d'un couple $(p_k(q) , c_k(q))$ à chaque valeur de q est telle qu'un même sous-code ne peut pas être présent à plus d'une reprise dans ledit code d'étalement (3).

Cette condition peut également s'écrire :

$$(p_k(q), c_k(q)) \neq (p_k(j), c_k(j)) \text{ pour } q \neq j.$$

Les codes d'étalement de l'invention sont donc plus longs et plus nombreux par famille que les codes structurés.

En notant N la période des sous-codes (aussi égale au facteur d'expansion de la bande), et K le nombre de sous-codes de base cycliquement différents (c'est-à-dire ne pouvant être égalés, même par permutation circulaire), la période maximale de chaque code d'étalement est $N^2K$. En effet, on peut faire N permutations sur les sous-codes de base puisque leur période est N. Il y a donc NK couples $(p_k, c_k)$ possibles, c'est-à-dire NK sous-codes distincts au total. La période d'un sous-code étant N, la période maximale d'un code d'étalement est donc N (NK) = $N^2K$.

On rappelle, à titre de comparaison, que pour les codes structurés, la période maximale est $N^2$. Dans ce cas, un seul "sous-code de base" de longueur N étant utilisé, il existe N permutations circulaires possibles et donc N sous-codes différents possibles.

La période d'un sous-code étant N, la période maximale d'un code d'étalement est donc $N(N) = N^2$.

Dans un premier mode de réalisation avantageux de l'invention, ladite étape d'association d'un couple $(p_k(q), c_k(q))$ à chaque valeur de q consiste à calculer lesdites valeurs $p_k(q)$ et $c_k(q)$ à l'aide d'une fonction paramétrée par ledit index k dudit code d'étalement dans ladite famille.

Ainsi, seuls les couples $(p_k(q), c_k(q))$ nécessaires à la construction de ce code d'étalement sont calculés et uniquement lorsqu'ils nécessaires.

Dans un second mode de réalisation avantageux de l'invention, ladite étape d'association d'un couple $(p_k(q), c_k(q))$ à chaque valeur de q consiste à lire lesdites valeurs $p_k(q)$ et $c_k(q)$ dans un tableau préalablement généré à l'aide d'une fonction paramétrée par ledit index k dudit code d'étalement dans ladite famille.

L'invention concerne également un procédé de génération d'un tableau du type utilisé dans un procédé de construction d'un code d'étalement tel que décrit précédemment, ledit tableau associant, pour chacun desdits codes d'étalement indexés par k, un couple de valeurs $(p_k(q) , c_k(q))$ à chaque index de concaténation q,

ledit procédé de génération d'un tableau comprenant les étapes suivantes:

- choix d'un nombre K de sous-codes de base disponibles ;

- génération itérative, en fonction d'une part dudit index k de code d'étalement dans ladite famille, puis d'autre part dudit index q de concaténation, desdits couples $(p_k(q), c_k(q))$, ladite étape de génération itérative consistant à :
  * choisir une variable $V_k(q) = p_k(q) * K + c_k(q)$ avec $V_k(q)$ le plus petit entier tel que :
    . $V_k(q) < K.N$ où N est ladite période des sous-codes ;
    . $V_k(q) \neq V_k(q')$ pour tout q'<q, avec q' correspondant à toutes les valeurs de q pour lesquelles un couple $(p_k(q), c_k(q))$ a déjà été calculé;
    . $V_k'(q) \neq V_k(q)$ pour tout k'< k, avec k' correspondant à toutes les valeurs de k pour lesquelles un couple $(p_k(q), c_k(q))$ a déjà été calculé;
  * effectuer la division entière de $V_k(q)$ par K, de façon à obtenir lesdites valeurs $p_k(q)$ et $c_k(q)$.

Ainsi, cette étape de construction est itérative et permet de calculer l'ensemble des couples $(p_k(q), c_k(q))$ nécessaires à la construction des codes d'étalement. Il est à noter qu'un tel tableau peut être utilisé dans le second mode de réalisation préférentiel d'un procédé de construction d'un code d'étalement selon l'invention.

Naturellement, l'invention concerne également le résultat obtenu par l'application du procédé de construction d'un code d'étalement, à savoir, une famille de codes d'étalement pour un système de transmission numérique à accès multiple par répartition par codes et à séquence directe, comprenant une pluralité de codes distincts, dans laquelle chacun de ces codes est issu de ce procédé.

De même, l'invention vise aussi un dispositif d'attribution d'un code d'étalement dans un système de transmission numérique à accès multiple par répartition par codes et à séquence directe, comprenant des moyens pour attribuer un code propre à un utilisateur, ce code propre résultant du procédé mentionné ci-dessus.

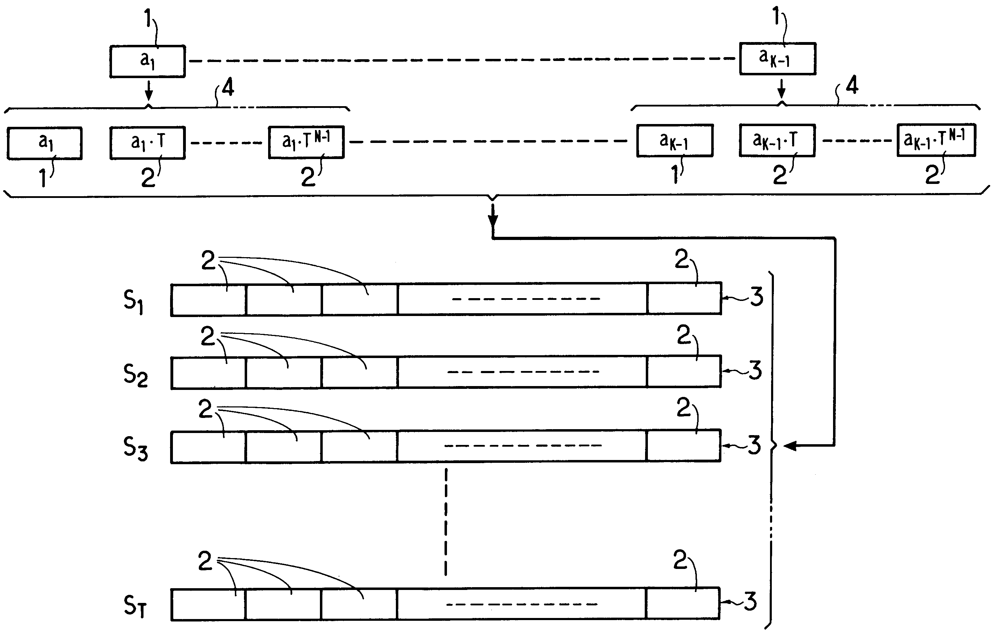

D'autres caractéristiques et avantages de l'invention apparaîtront à la lecture de la description suivante d'un mode de réalisation préférentiel de l'invention, donné à titre d'exemple indicatif et non limitatif, et du dessin annexé, dans lequel la figure unique illustre le procédé de l'invention.

L'invention concerne donc un procédé de construction d'un code d'étalement associé à un utilisateur d'un système de transmission numérique à accès multiple par répartition par codes et à séquence directe (système DS - CDMA).

Un tel système de transmission DS - CDMA est par exemple utilisé dans un système de radiocommunication numérique. Dans ce cas, un code d'étalement distinct est associé à chaque station mobile (c'est-à-dire à chaque abonné) reliée à une station de base.

D'une façon générale, un code d'étalement se présente sous la forme d'une séquence binaire pseudo-aléatoire, caractérisé par sa fréquence, appelée fréquence chip, et par la période de répétition de la séquence pseudo-aléatoire, dite période code.

Un signal de données à émettre se présente sous la forme d'un signal binaire, caractérisé par sa fréquence bit.

La fréquence bit est un multiple de la fréquence chip et le facteur d'étalement d'un code d'étalement est par définition le rapport G entre la fréquence chip et la fréquence bit. Le nombre maximal d'éléments sur lesquels sont effectuées les corrélations est égal à ce facteur d'étalement G.

A l'émission, le signal de données est combiné au code d'étalement, par exemple par une addition module ou par une multiplication selon la nature de ces signaux. Le signal obtenu est filtré puis transmis à travers un canal.

A la réception, après un nouveau filtrage, le décodage s'effectue en combinant le signal reçu avec une réplique locale du code d'étalement synchronisée sur l'émission.

On suppose ici que :
- le filtrage à la réception est adapté au filtrage à l'émission ;
- une estimation de la réponse impulsionnelle du canal existe ;
- la synchronisation est acquise et parfaite, et donc le code d'étalement est parfaitement reproduit en réception et aligné avec le code d'étalement en émission.

Le décodage proprement dit est effectué dans un récepteur "rake", sous la forme de :
- une corrélation du signal reçu avec le code d'étalement, permettant d'identifier les signaux de trajet qui représentent la contribution des différents trajets au signal reçu, et
- une pondération de ces signaux de trajet grâce à l'estimation de la réponse impulsionnelle du canal, pour produire une estimation du signal de données.

On peut montrer qu'afin d'optimiser les performances en présence d'interférences, les codes d'étalement doivent présenter certaines caractéristiques.

Plus précisément :
- afin de lutter contre les interférences multi-utilisateurs, les codes d'étalement doivent présenter de bonnes propriétés d'intercorrélations apériodiques partielles, et
- afin de lutter contre les interférences entre symboles, les codes d'étalement doivent présenter de bonnes propriétés d'autocorrélations apériodiques partielles.

De plus, afin d'optimiser les performances du récepteur rake, on s'intéresse aux corrélations effectuées sur une longueur au plus égale au gain d'étalement.

La figure unique illustre le procédé selon l'invention de construction d'une famille de codes d'étalement possédant de telles propriétés d'inter et auto-corrélations apériodiques partielles.

Le procédé de l'invention comprend, pour la construction d'un code d'étalement 3 d'une famille, au moins une étape de concaténation de plusieurs sous-codes différents 4, à savoir :

- soit des sous-codes de base 1 ;
- soit des sous-codes secondaires 2.

Les sous-codes de base 1 sont pris dans une même famille de sous-codes et donc :

- ils sont tous différents les uns des autres, même après permutation circulaire ; et
- ils possèdent tous la même période.

Cette famille de sous-codes de base 1 est par exemple une famille de codes de Gold, ou une famille de codes de Kasami. Dans ce cas, les sous-codes de base sont par exemple obtenus en utilisant un même couple de polynômes générateurs.

On prend par exemple la période commune à tous les sous-codes 2 égale au facteur d'expansion de la bande (ou facteur d'étalement) commun à tous les codes d'étalement d'une même famille.

Les sous-codes secondaires 2 sont obtenus par permutation circulaire des sous-codes de base 1.

En d'autres termes, un code d'étalement 3 est obtenu par concaténation de sous-codes de base 1 en tant que tels, ou bien dont on a tourné la phase (dans ce dernier cas, les sous-codes ainsi obtenus sont alors appelés sous-codes secondaires 2).

Le $k^{ème}$ code d'étalement peut s'écrire :

$$S_k = \sum_{q=0}^{n-1} T^{p_k(q)} . a_{c_k(q)}$$

où :

. k est l'index de code d'étalement ;

. $\Sigma$ signifie concaténation ;

. q est l'index de concaténation ;

. n est le facteur de concaténation, c'est-à-dire le nombre total de sous-codes à concaténer pour former ledit code d'étalement ;

. $T^x$ est une permutation circulaire de x éléments ;

. $a_y$ est un sous-code de base d'une famille $\{a_y\}$ de sous-codes de base pouvant être utilisés pour construire les sous-codes à concaténer ;

. $c_k(q)$ est la fonction indiquant le sous code de base à utiliser pour construire le $q^{ème}$ sous-code à concaténer dans le $k^{ème}$ code d'étalement ;

. $p_k(q)$ est la fonction indiquant le nombre de permutations à effectuer sur le sous-code de base à considérer $a_y$, avec $y=c_k(q)$.

Ainsi, le $k^{ème}$ code d'étalement peut également être défini par une suite de n couples $(p_k(q), c_k(q))$.

Il est possible d'exiger que plusieurs critères de choix de ces couples soient vérifiés, et notamment les deux critères suivants :

- $(p_k(q), c_k(q)) \neq (p_j(q), c_j(q))$ pour $k \neq j$ ; et
- $(p_k(q), c_k(q)) \neq (p_k(j), c_k(j))$ pour $q \neq j$.

Le respect du premier critère permet qu'un même sous-code n'ait pas un même rang de concaténation dans deux codes d'étalement distincts.

Le respect du second critère permet qu'un même sous-code ne soit pas présent à plusieurs reprises dans un même code d'étalement.

$p_k(q)$ prend ses valeurs dans l'ensemble $\{0, ..., N-1\}$, avec N la période de chacun des sous-codes ; N est également généralement le facteur d'étalement du système de transmission dans lequel sont utilisés les codes d'étalement.

$c_k(q)$ prend ses valeurs dans l'ensemble $\{0, ..., K-1\}$, avec K le nombre de sous-codes de base différents (mais égaux à une permutation près).

Si le second critère de choix des couples $(p_k(q), c_k(q))$ est vérifié, la présence d'un code d'étalement est limitée par $N^2K$.

En effet, on peut faire N permutations sur les sous-codes de base et il y a K sous-codes de base, donc il y a NK couples $(p_k(q)$ , $c_k(q))$ distincts. Or la période d'un sous-code est N, dons la période maximale d'un code d'étalement est N (NK) = $N^2K$.

Cette période maximale est très longue comparée à celle des codes structurés qui est limitée par $N^2$ du fait qu'on concatène des sous-codes secondaires issus d'un seul sous-code de base.

Selon l'invention, faire une intercorrélation apériodique partielle entre deux codes d'étalement, pour des indices de début multiples du facteur d'étalement, revient à faire une intercorrélation apériodique sur les deux sous-codes constituant les codes d'étalement pour les instants pN, avec p entier.

Du fait du premier critère de choix des couples $(p_k(q)$ , $c_k(q))$, et pour des indices de début multiples du facteur d'étalement, une intercorrélation apériodique partielle est donc égale :

- soit à une intercorrélation apériodique entre deux sous-codes différents ;
- soit à une autocorrélation apériodique sur un sous-code.

Si les indices de début sont multiples du facteur d'étalement, on récupère donc les propriétés d'inter et auto-corrélations apériodiques des sous-codes pour les inter et auto-corrélations apériodiques partielles des codes d'étalement, avec une longueur de corrélation maximale égale à la période d'un sous-code.

De même, selon l'invention, pour des indices de début multiples du facteur d'étalement, une auto-corrélation apériodique partielle sur un code d'étalement est égale :

- soit à une intercorrélation apériodique entre deux sous-codes différents ;
- soit à une autocorrélation apériodique sur un sous-code.

Si les indices de début sont multiples du facteur d'étalement, on récupère donc également les propriétés d'auto et d'inter-corrélations apériodiques des sous-codes pour les auto-corrélations apériodiques partielles des codes d'étalement, avec une longueur de corrélation maximale égale à la période d'un sous-code.

Il est à noter que :

- pour une transmission descendante ("downlink"), dans laquelle les utilisateurs sont synchronisés entre eux, on s'intéresse aux auto et inter-corrélations partielles apériodiques pour des indices de départ multiples du facteur d'étalement ; et
- pour une transmission ascendante ("uplink"), dans laquelle les utilisateurs ne sont pas synchronisés entre eux, on s'intéresse :
  * aux inter-corrélations partielles apériodiques pour des indices quelconques, et
  * aux auto-corrélations partielles apériodiques pour des indices multiples du facteur d'étalement

On comprend donc que l'invention s'applique mieux au cas des transmissions descendantes ("downlink").

Selon l'invention, l'étape de concaténation de plusieurs sous-codes pour construire un code d'étalement est précédée d'une étape d'association d'un couple $(p_k(q)$ , $c_k(q))$ à chaque valeur de q.

Comme discuté auparavant, on peut imposer à une telle association de respecter les deux critères suivants :

- $(p_k(q), c_k(q)) \neq (p_j(q), c_j(q))$ pour $k \neq j$ ; et
- $(p_k(q), c_k(q)) \neq (p_k(j), c_k(j))$ pour $q \neq j$.

Pour cela, on peut imaginer plusieurs modes de réalisation de cette étape d'association.

Ainsi, dans un premier mode réalisation, cette étape d'association d'un couple $(p_k(q), c_k(q))$ à chaque valeur de q peut consister à calculer les valeurs $p_k(q)$ et $c_k(q)$ à l'aide d'une fonction paramétrée par l'index k.

Dans un second mode de réalisation, cette étape d'association d'un couple $(p_k(q), c_k(q))$ à chaque valeur de q peut consister à lire les valeurs $p_k(q)$ et $c_k(q)$ dans un tableau préalablement généré à l'aide d'une fonction paramétrée par l'index k.

Dans ce dernier cas, un exemple de procédé de génération d'un tel tableau peut comprendre les étapes suivantes :

- on choisit un nombre K de sous-codes de base disponibles ;
- on génère de façon itérative, en fonction d'une part de l'index k et d'autre part de l'index q, des couples $(p_k(q), c_k(q))$.

Cette génération itérative consiste par exemple à :

  * choisir une variable $V_k(q) = p_k(q) * K + c_k(q)$ avec $V_k(q)$ le plus petit entier tel que :
    . $V_k(q) < K.N$ où N est la période des sous-codes ;
    . $V_k(q) \neq V_k(q')$ pour tout $q' < q$, avec q' correspondant à toutes les valeurs de q pour lesquelles un couple $(p_k(q)$ , $c_k(q))$ a déjà été calculé;
    . $V_{k'}(q) \neq V_k(q)$ pour tout $k' < k$, avec k' correspondant à toutes les valeurs de k pour lesquelles un couple $(p_k(q)$ , $c_k(q))$ a déjà été calculé;
  * effectuer la division entière de $V_k(q)$ par K, de façon à obtenir les valeurs $p_k(q)$ et $c_k(q)$.

Par ailleurs, les dispositifs d'attribution de codes d'étalement dans un système de transmission numérique à accès multiple par répartition par codes et à séquence directe font partie de l'état de la technique, ils ne seront donc pas détaillés. Cependant, l'invention prévoit également d'adjoindre à ces dispositifs des moyens pour attribuer à un utilisateur un code propre résultant du procédé de construction d'un code d'étalement décrit ci-dessus. A titre d'exemple, les codes disponibles sont rangés dans une mémoire.

**Revendications**

1. Procédé de construction d'un code d'étalement associé à un utilisateur d'un système de transmission numérique à accès multiple par répartition par codes et à séquence directe,
   caractérisé en ce qu'il comprend au moins une étape de concaténation de plusieurs sous-codes différents (4), à savoir :
   - au moins deux sous-codes de base (1) différents, notamment cycliquement, et appartenant à une même famille de sous-codes de base ; et
   - au moins un sous-code secondaire (2) obtenu par permutation circulaire d'un desdits sous-codes de base (1).

2. Procédé selon la revendication 1, caractérisé en ce que la période desdits sous-codes (4) est égale au gain d'étalement dudit système de transmission.

3. Procédé selon l'une quelconque des revendications 1 et 2, caractérisé en ce que ladite famille de sous-codes de base (1) appartient au groupe comprenant :
   - la famille des codes de Gold ; et
   - la famille des codes de Kasami.

4. Procédé selon l'une quelconque des revendications 1 à 3, caractérisé en ce que ledit code d'étalement appartient à une famille d'au moins deux codes d'étalement distincts,
   et en ce que ledit code d'étalement (3) peut s'écrire :

$$S_k = \sum_{q=0}^{n-1} T^{p_k(q)} . a_{c_k(q)}$$

où :
   - . k est l'index dudit code d'étalement dans ladite famille ;
   - . $\Sigma$ signifie concaténation ;
   - . q est l'index de concaténation ;
   - . n est le facteur de concaténation, c'est-à-dire le nombre total de sous-codes à concaténer pour former ledit code d'étalement ;
   - . $T^x$ est une permutation circulaire de x éléments ;
   - . $a_y$ est un sous-code de base d'une famille $\{a_y\}$ de sous-codes de base pouvant être utilisés pour construire les sous-codes à concaténer ;
   - . $c_k(q)$ est la fonction indiquant le sous-code de base à utiliser pour construire le q[ème] sous-code à concaténer dans ledit k[ème] code d'étalement ;
   - . $p_k(q)$ est la fonction indiquant le nombre de permutations à effectuer sur le sous-code de base à considérer $a_y$, avec $y=c_k(q)$.

5. Procédé selon l'une quelconque des revendications 1 à 4, caractérisé en ce qu'il comprend une étape d'association d'un couple ($p_k(q)$, $c_k(q)$) à chaque valeur de q.

6. Procédé selon la revendication 5, caractérisé en ce que ladite étape d'association d'un couple ($p_k(q)$, $c_k(q)$) à chaque valeur de q est telle qu'un même sous-code ne peut pas avoir un même rang de concaténation dans ledit code d'étalement (3) et dans n'importe quel autre code d'étalement de ladite famille de codes d'étalement.

7. Procédé selon l'une quelconque des revendications 5 ou 6, caractérisé en ce que ladite étape d'association d'un couple ($p_k(q)$, $c_k(q)$) à chaque valeur de q est telle qu'un même sous-code ne peut pas être présent à plus d'une reprise dans ledit code d'étalement (3).

8. Procédé selon l'une quelconque des revendications 5 à 7, caractérisé en ce que ladite étape d'association

d'un couple $(p_k(q), c_k(q))$ à chaque valeur de q consiste à calculer lesdites valeurs $p_k(q)$ et $c_k(q)$ à l'aide d'une fonction paramétrée par ledit index k dudit code d'étalement dans ladite famille.

9. Procédé selon l'une quelconque des revendications 5 à 7, caractérisé en ce que ladite étape d'association d'un couple $(p_k(q), c_k(q))$ à chaque valeur de q consiste à lire lesdites valeurs $p_k(q)$ et $c_k(q)$ dans un tableau préalablement généré à l'aide d'une fonction paramétrée par ledit index k dudit code d'étalement dans ladite famille.

10. Procédé de génération d'un tableau du type utilisé dans un procédé de construction d'un code d'étalement selon la revendication 9, ledit tableau associant, pour chacun desdits codes d'étalement indexés par k, un couple de valeurs $(p_k(q), c_k(q))$ à chaque index de concaténation q,
   caractérisé en ce qu'il comprend les étapes suivantes :
   - choix d'un nombre K de sous-codes de base disponibles ;
   - génération itérative, en fonction d'une part dudit index k de code d'étalement dans ladite famille, puis d'autre part dudit index q de concaténation, desdits couples $(p_k(q), c_k(q))$, ladite étape de génération itérative consistant à :
       * choisir une variable $V_k(q) = p_k(q) * K + c_k(q)$ avec $V_k(q)$ le plus petit entier tel que :
           . $V_k(q) < K.N$ où N est ladite période des sous-codes ;
           . $V_k(q) \neq V_k(q')$ pour tout q'< q, avec q' correspondant à toutes les valeurs de q pour lesquelles un couple $(p_k(q), c_k(q))$ a déjà été calculé;
           . $V_{k'}(q) \neq V_k(q)$ pour tout k'< k, avec k' correspondant à toutes les valeurs de k pour lesquelles un couple $(p_k(q), c_k(q))$ a déjà été calculé;
       * effectuer la division entière de $V_k(q)$ par K, de façon à obtenir lesdites valeurs $p_k(q)$ et $c_k(q)$.

11. Famille de codes d'étalement pour un système de transmission numérique à accès multiple par répartition par codes et à séquence directe, comprenant une pluralité de codes distincts,
   caractérisé en ce que chacun de ces codes résulte du procédé selon l'une quelconque des revendications 1 à 9.

12. Dispositif d'attribution d'un code d'étalement dans un système de transmission numérique à accès multiple par répartition par codes et à séquence directe, comprenant des moyens pour attribuer un code propre à un utilisateur,
   caractérisé ce que ce code résulte du procédé selon l'une quelconque des revendications 1 à 9.

EP 0 652 647 A1

$a_1$

$a_{K-1}$

$a_1$

$a_1 \cdot T$

$a_1 \cdot T^{N-1}$

$a_{K-1}$

$a_{K-1} \cdot T$

$a_{K-1} \cdot T^{N-1}$

$S_1$

$S_2$

$S_3$

$S_T$

EP 0 652 647 A1

**Office européen des brevets**

# RAPPORT DE RECHERCHE EUROPEENNE

Numero de la demande

EP 94 40 2507

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US-A-5 210 770 (RICE) 11 Mai 1993<br>* le document en entier *<br>--- | 1,3 | H04B1/707<br>H04J13/00<br>H04B7/26 |
| A | MILCOM 91, CONFERENCE RECORD,<br>vol.2, 1991<br>pages 784 - 790, XP273811<br>KARKKAINEN & LEPPANEN 'Comparison of the performance of some linear spreading code families for asynchronous DS/SSMA systems'<br>* le document en entier *<br>--- | 1,3 | |
| A | WO-A-87 00370 (THE SECRETARY OF STATE FOR DEFENSE IN HER BRITANNIC MAJESTY'S GOVERNME) 15 Janvier 1987<br>--- | | |
| A | PROC. OF THE 1991 AMERICAN CONTROL CONF.,<br>vol.3, 28 Juin 1991, BOSTON, MA,US<br>pages 2557 - 2562, XP269090<br>SOLJANIN ET AL 'Spread-Spectrum road-automobile communications'<br>--- | | |
| A | EP-A-0 563 020 (ERICSSON - GE MOBILE COMMUNICATIONS INC.) 29 Septembre 1993<br>--- | | **DOMAINES TECHNIQUES RECHERCHES (Int.Cl.6)**<br><br>H04B<br>H04J<br>H04L |
| A | PATENT ABSTRACTS OF JAPAN<br>vol. 16, no. 488 (E-1277) 9 Octobre 1992<br>& JP-A-04 179 324 (YAMAHA CORP) 26 Juin 1992<br>* abrégé *<br>--- | | |
| A | PATENT ABSTRACTS OF JAPAN<br>vol. 11, no. 198 (E-519) 25 Juin 1987<br>& JP-A-62 023 634 (NEC HOME ELECTRONICS LTD) 31 Janvier 1987<br>* abrégé *<br>----- | | |

Le présent rapport a été établi pour toutes les revendications

| Lieu de la recherche | Date d'achèvement de la recherche | Examinateur |
|---|---|---|
| LA HAYE | 10 Février 1995 | Devergranne, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

  & : membre de la même famille, document correspondant

EPO FORM 1503 03.82 (P04C02)

12